(19) Europäisches Patentamt / European Patent Office / Office européen des brevets

(11) **EP 1 976 237 B1**

(12) **FASCICULE DE BREVET EUROPEEN**

(45) Date de publication et mention de la délivrance du brevet:
**10.07.2019 Bulletin 2019/28**

(51) Int Cl.:
*H04L 29/12* *(2006.01)*     *B64D 11/00* *(2006.01)*

(21) Numéro de dépôt: **08102878.9**

(22) Date de dépôt: **25.03.2008**

(54) **Attribution d'adresses réseau dans un système de divertissement en vol**

Netzadressenzuteilung in einem Flugunterhaltungssystem

Assigning network addresses in an in-flight entertainment system

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.03.2007 FR 0702228**

(43) Date de publication de la demande:
**01.10.2008 Bulletin 2008/40**

(73) Titulaire: **THALES**
**92400 Courbevoie (FR)**

(72) Inventeurs:
• **Durrey, Florent**
**31400 Toulouse (FR)**
• **Trinquecoste, Frédéric**
**31100 Toulouse (FR)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
**GB-A- 2 430 118     US-A1- 2006 246 892**

**Description**

La présente invention concerne un procédé d'attribution d'adresses réseaux dans un système de divertissement en vol à bord d'un aéronef, dit système IFE (*"In Flight Entertainment"*), basé sur un réseau de distribution de données sans fil.

Les systèmes de divertissement en vol les plus récents utilisent des techniques de transmission sans fil des données, qui permettent de réduire les problèmes de connectique et d'améliorer l'offre personnalisée de services pour les vols longs courriers : vidéo à la demande, connexion internet, courrier électronique...

Une architecture de base d'un système de divertissement en vol IFE d'un aéronef, comprend un ensemble d'unités de traitement SDB (*"Seat Data Box"*) en réseau. Chaque unité de distribution SDB dessert des équipements individuels, tels qu'un écran plat, une télécommande, une prise d'alimentation pour ordinateur portable, ..., équipant chaque siège d'un groupe de sièges passagers, généralement des sièges passagers d'une même rangée, qui sont disposés côte à côte, soit entre deux couloirs soit entre un couloir et une paroi de la cabine. Une unité de traitement peut ainsi par exemple desservir 2, 3 ou 4 sièges passagers. Chaque unité est disposée sous un siège du groupe qu'elle dessert et comporte typiquement un accès à un réseau d'alimentation électrique de bord.

Les groupes de sièges sont répartis en colonnes. Les unités de traitement d'une même colonne sont alimentées par une colonne de distribution d'alimentation correspondante. Chaque unité de traitement SDB communique avec un serveur réseau au moyen d'au moins un point d'accès.

Pour permettre d'offrir des services personnalisés à chaque siège, il est nécessaire d'attribuer une adresse réseau à chacun des équipements du réseau, c'est à dire notamment aux unités de traitement et aux équipements individuels. Ceci est réalisé à la première mise en route du système IFE dans un aéronef donné, et à chaque fois qu'un équipement est changé (maintenance). Cette séquence d'attribution d'adresse réseau nécessite notamment la connaissance par le serveur de la position de chaque équipement dans le réseau : à quel siège d'un groupe, à quel groupe de sièges, dans quelle colonne.

De manière habituelle, une fois que les unités de traitement sont identifiées et configurées, chaque équipement individuel est identifié et configuré par l'unité de traitement qui le dessert et ceci sans problème particulier.

S'agissant de l'identification et de la configuration des unités de traitement dans un réseau filaire, l'identification de la position d'une unité de traitement dans une colonne ne pose pas de problème particulier. Elle peut être effectuée de manière connue par une technique de détermination de proche en proche, en utilisant une procédure d'apprentissage du réseau ("network *discovery"*), telle que décrite dans la norme IEEE 802.1AB.

C'est l'identification de la colonne dans laquelle est positionnée l'unité qui soulève quelques difficultés. Dans les architectures IFE de type ETHERNET filaire, chaque colonne était connectée à un port spécifique d'entrée/sortie de données du serveur par une liaison éthernet filaire : la première unité de traitement juste derrière le port obtenait ainsi l'identification de la colonne (le port identifiant la colonne), information qui se propageait de proche en proche à toutes les unités de la colonne. Dans le cas de liaisons sans fil, ce mécanisme ne peut plus s'appliquer : le serveur comprend une seule interface sans fil d'entrée/sortie par laquelle toutes les données de toutes les colonnes transitent (via un point d'accès).

Dans ce cas, selon l'état de l'art, tel qu'illustré par exemple par la demande de brevet US 2006/0246892, l'identification de la colonne est obtenue en ne mettant sous-tension qu'une seule colonne à la fois, ce qui permet d'établir une bijection entre l'unique colonne alimentée et les unités de traitement mises sous tension. Ceci permet à chaque unité de traitement de déterminer sa position : la colonne associée est la colonne sous-tension, information fournie par le serveur ; la position dans la colonne est obtenue par la technique de détermination de proche en proche habituelle par envoi/réception de messages avec le serveur réseau pendant le processus de démarrage déclenché dans l'unité de traitement par la mise sous-tension. La durée de la séquence d'attribution des adresses aux unités de traitement est alors égale à la durée de la séquence de démarrage pour une colonne multipliée par le nombre de colonnes. Cette durée dépend typiquement de la durée de la séquence de démarrage de chacune des unités de traitement, typiquement quelques minutes. En pratique, dans un aéronef dont tous les sièges sont équipés d'un système IFE, on peut arriver à une séquence d'attribution d'environ 1 heure (16 colonnesx4 minutes).

Les cahiers des charges des avionneurs indiquent une durée qui ne doit généralement pas dépasser 10 minutes. Il faut donc arriver à réduire la durée du processus.

L'invention propose une solution technique à ce problème d'identification de colonne dans un système IFE sans fil. Un objet de la revendication est un procédé comme celui de la revendication 1. Un autre objet de l'invention est un système comme celui de la revendication 8. Des modes de réalisation préférés sont revendiqués dans les revendications dépendantes.

L'idée à la base de l'invention est de mettre sous tension les colonnes les unes après les autres, avec une temporisation entre chaque mise sous-tension de durée connue, sans attendre la fin du processus de démarrage des unités de traitement sans fil dans chaque colonne. La temporisation est choisie pour permettre de déterminer de manière fiable pour chaque unité de traitement, la colonne associée, sur la base d'une date horaire de réception par le serveur réseau d'un message envoyé par chaque unité de traitement et qui contient la durée du processus de démarrage après initialisation de l'horloge interne de l'unité de traitement. Cette détermination est possible car la durée entre l'instant d'activation du processus de démarrage d'une unité de traitement, par mise sous-tension de la colonne correspondante et l'instant d'activation de l'initialisation de l'horloge interne est sensiblement la même pour chaque unité de traitement du système IFE : on peut l'estimer par une valeur moyenne, avec une tolérance dont on peut estimer la valeur maximale, pour une ligne de produit donnée (le produit étant l'unité de traitement). En outre, il suffit de choisir la valeur de temporisation entre deux mises sous tension suffisamment grande devant cette variation, la durée de la temporisation n'étant pas critique dans la durée du processus d'identification selon l'invention.

Ainsi, en séquençant la mise sous tension des colonnes, on réduit considérablement la durée du processus d'identification des colonnes, et la date de réception de chacun des messages par le serveur combinée à la durée transmise dans le message correspondant permet de discriminer de manière fiable une colonne parmi les n colonnes du système.

Telle que caractérisée l'invention concerne donc un procédé d'attribution d'une adresse réseau à chacun des équipements sans fils d'un réseau dans un aéronef, lesdits équipements étant aptes à échanger des messages avec un serveur réseau par au moins un point d'accès, chaque équipement étant placé à l'emplacement d'un siège dans une colonne de sièges et alimenté par une colonne d'alimentation propre à la colonne associée, caractérisé en ce que ledit procédé comprend un processus d'identification par le serveur de la colonne de sièges de chacun desdits équipements sans fils, à partir d'un message envoyé par chaque équipement après sa mise sous-tension, ledit processus d'identification par le serveur comprenant l'exécution en parallèle des étapes suivantes :

- une première étape de mise sous-tension des équipements sans fil, séquentiellement par colonne, avec une temporisation de durée connue entre la mise sous-tension dans une colonne et la mise sous-tension dans une colonne suivante, la mise sous-tension de chaque équipement déclenchant un mécanisme d'envoi d'un message au serveur après mise à zéro d'une horloge interne de l'équipement, ledit message contenant une information horaire propre à l'équipement, qui est la valeur courante de ladite horloge interne au moment de l'envoi du message, et
- une deuxième étape de datation horaire, par une horloge interne du serveur fournissant une date de réception dudit message envoyé par chaque équipement mis sous-tension, et l'identification par le serveur de la colonne de l'équipement ayant envoyé le message, basée sur l'information horaire contenue dans le message, la datation horaire du message par le serveur et la durée de temporisation de mise sous-tension entre les colonnes, ladite identification correspondant au rang i de la colonne dans la séquence de mise sous tension des colonnes et étant déterminée par calcul au moyen de l'équation suivante :
$i = (t_{i,j} - t_1 - b_{i,j} - s_0) / (\Delta + 1)$, où $s_O$ est la durée moyenne de la durée du processus de démarrage d'un équipement entre l'instant d'activation du processus de démarrage et l'initialisation de l'horloge interne de l'équipement et $t_1$ l'instant de mise sous-tension de la première colonne de la séquence de mise sous tension des colonnes.

D'autres avantages et caractéristiques de l'invention sont détaillés dans la description suivante en référence aux dessins illustrés d'un mode de réalisation de l'invention, donné à titre d'exemple non limitatif. Dans ces dessins :

- la figure 1 illustre une architecture réseau sans fil simplifiée des unités de traitement d'un système IFE;
- la figure 2 est un chronogramme illustrant le processus d'envoi et réception des messages entre les unités de traitement et le serveur en fonction des instants de mise sous tension des colonnes;
- la figure 3 illustre le processus d'identification activé dans le serveur, par une séquence d'attribution d'adresses réseau;
- la figure 4 illustre les tâches du processus d'identification activées dans une unité de traitement par la mise sous-tension de la colonne associée.

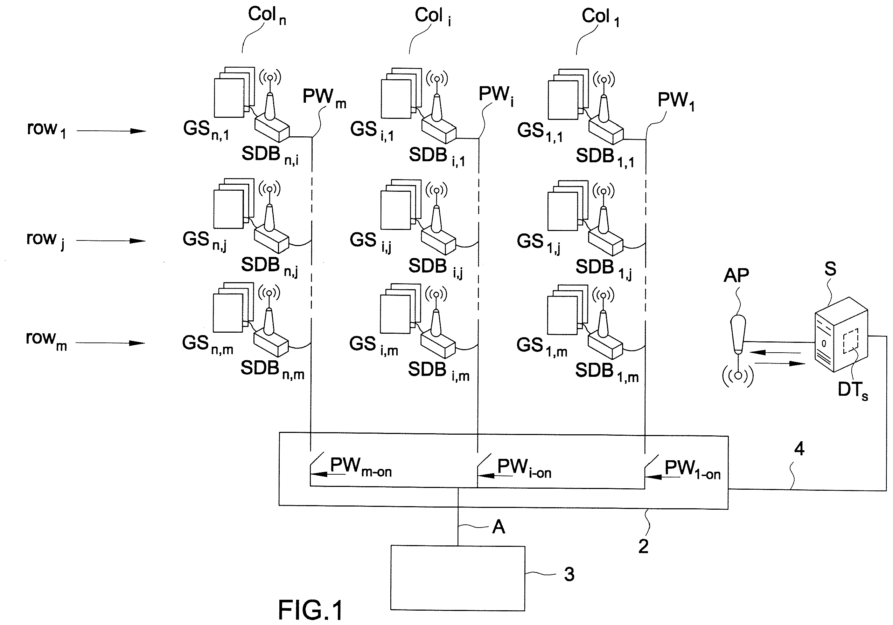

La figure 1 illustre de manière simplifiée une architecture d'un système IFE sans fil permettant la mise en oeuvre d'un processus d'identification selon l'invention de la colonne de chacune des unités de traitement $SDS_{i,j}$ sans fil ($i \in [1,...n]$, $j \in [1,...m]$, i, j entiers) du système.

Ce système comprend un serveur S, au moins un point d'accès AP, relié au serveur par une liaison réseau filaire 1 (un câble Ethernet par exemple), et des unités de traitement sans fil $SDB_{i,j}$.

Chaque unité de traitement $SDB_{i,j}$ permet de desservir des équipements individuels d'un groupe de siège associé ($GS_{i,j}$).

La position de chaque unité de traitement sans fil $SDB_{i,j}$ peut-être définie par un identifiant i de la colonne $col_i$ dans laquelle elle se trouve et un identifiant j de la rangée $row_j$ dans laquelle elle se trouve.

A chaque colonne $col_i$ correspond une colonne d'alimentation spécifique $PW_i$ qui permet d'alimenter chacune des unités de traitement $SDB_{i,j}$ de cette colonne.

Le système selon l'invention comprend des moyens 2 aptes à commuter l'alimentation A fournie par un générateur 3 sur chacune des colonnes d'alimentation $PW_i$, de manière individuelle, colonne par colonne ou simultanément, sous contrôle du serveur S qui commande les moyens 2, par exemple par une liaison 4 spécifique, dans l'exemple filaire. Par exemple, les moyens 2 sont réalisés par un ensemble de commutateurs de puissance, un commutateur par colonne d'alimentation $PW_i$. L'activation d'un signal de commutation correspondant $PW_i$-on ferme le commutateur et provoque la mise sous tension de toutes les unités de traitement $SDS_{i,j}$ connectées à cette colonne.

Les unités de traitement $SDB_{i,j}$ sont aptes à échanger des données avec un serveur réseau S via au moins un point d'accès sans fil AP. En pratique, le système IFE comprendra généralement plusieurs points d'accès, situés dans différentes zones de l'avion, chaque unité de traitement étant capable d'établir une liaison sans fil avec le point d'accès qu'il reçoit le mieux.

Le serveur S fournit les services demandés comme la vidéo à la demande, la connectivité internet, ou autres services personnalisés. Il comprend une horloge interne $DT_S$, qui lui permet notamment de réaliser une datation horaire d'événements.

Les unités de traitement comprennent également chacune une horloge interne $DT_{i,j}$, apte à fournir une information locale de temps (datation horaire).

Dans une telle architecture, une séquence SEQ-AD-IP d'attribution d'adresse réseau activée de manière habituelle à la première mise en service du système IFE ou par une opération de maintenance, appelle un processus d'identification PISDB selon l'invention, pour permettre à chaque unité de traitement sans fil $SDS_{i,j}$ du système d'identifier la colonne dans laquelle elle est située.

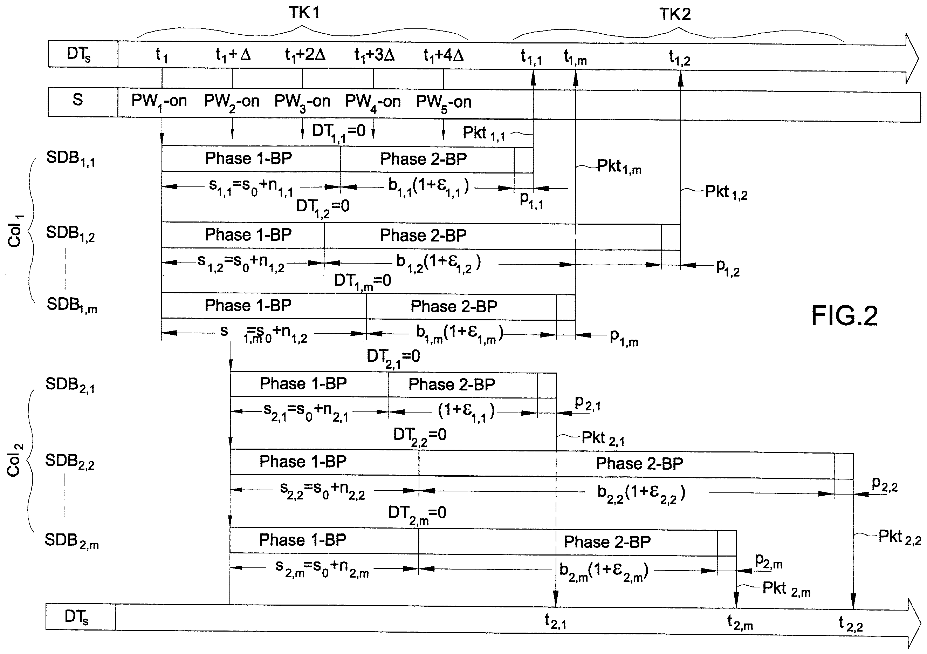

Ce processus d'identification selon l'invention va être expliqué dans un exemple de mise en oeuvre, en relation avec les figures 2, 3 et 4.

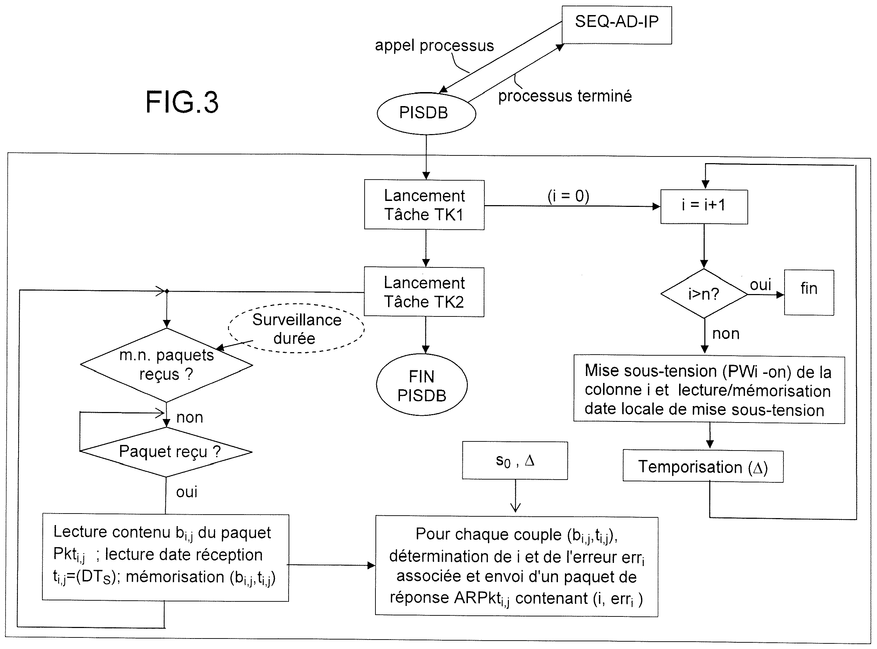

Le processus d'identification PISDB est déclenché dans le serveur qui lance alors successivement deux tâches, comme illustré sur les figures 2 et 3, une première tâche TK1, puis une deuxième tâche TK2, qui s'exécutent en parallèle. Typiquement, la deuxième tâche est lancée moins d'une seconde après la première tâche.

La première tâche TK1 consiste en la mise sous tension séquentielle des colonnes $Col_i$, avec une temporisation $\Delta$ entre deux colonnes successives.

On prend en exemple, comme illustré sur les figures 2 et 3, une temporisation $\Delta$ constante. On note $t_1$, l'instant de la mise sous tension de la première colonne $col_1$. La colonne suivante $col_2$ est mise sous tension au temps $t_2 = t_1 + \Delta$ ; la ième colonne est mise sous tension au temps $t_i = t_1 + (i-1) . \Delta$ ; et la nième colonne au temps $t_n = t_1 + (n-1) . \Delta$. La première tâche TK1 est alors terminée.

De manière plus détaillée, comme illustré sur la figure 3, la tâche TK1 est typiquement réalisée dans le serveur par une boucle de mise sous-tension en séquence l'une après l'autre des colonnes du réseau qui peut s'écrire :

- a). Pour i = 0 à n-1 :

  ○ i=i+1

  ○ Application de la tension sur la colonne $Col_i$, typiquement par commutation de l'alimentation sur la colonne d'alimentation $PW_i$; enregistrement de l'instant $t_i$ de mise sous tension correspondant (valeur courante de l'horloge interne $DT_S$).

  ○ temporisation d'une durée $\Delta$ avant de retourner en a).

La mise sous tension d'une unité de traitement $SDB_{i,j}$ déclenche de manière habituelle un processus de démarrage BP (*"Boot Process"*).

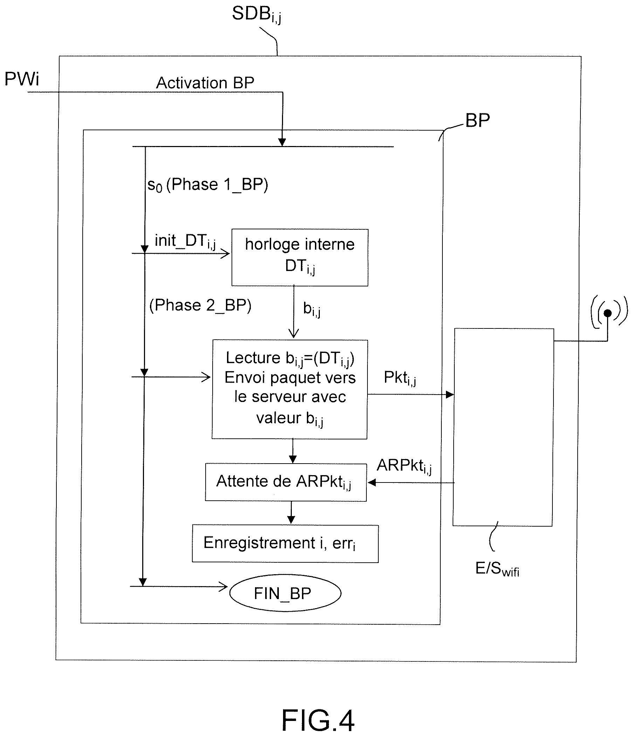

Ce processus BP comprend généralement (figure 4) une première phase Phase 1_BP, typiquement matérielle, correspondant à l'initialisation correcte des différents circuits/composants ..., et qui se termine habituellement par une initialisation de l'horloge interne init_$DT_{i,j}$ qui déclenche le lancement d'une deuxième phase Phase 2_BP, typiquement une phase d'initialisation du logiciel et des applications.

La première phase Phase 1_BP a habituellement une durée fixe $s_0$ depuis l'activation, tandis que la deuxième phase peut varier d'une unité de traitement à l'autre. Cette variation est due à plusieurs effets : temps d'accès différents à divers services, processus de "vieillissement logiciel " dans lesquels les applications mettent de plus en plus de temps à démarrer, températures et donc vitesses différentes, et surtout vérification périodique mais non systématique de certains systèmes et notamment vérification périodique de l'intégrité de la mémoire flash, qui prend beaucoup de temps..

Ainsi, on connaît par défaut (caractéristique du produit) la durée de la première phase du processus ($s_0$). On peut connaître la durée de la deuxième phase du processus de démarrage en lisant la valeur courante $b_{i,j}$ de l'horloge interne à la fin du processus de démarrage.

Selon l'invention, à la fin du processus de démarrage, l'unité de traitement envoie par son interface sans fil $E/S_{wifi}$, un paquet $Pkt_{i,j}$ contenant la valeur $b_{i,j}$ (figures 2, 3, 4), et attend en retour un paquet du serveur $ARPkt_{i,j}$ qui contient l'identification i de la colonne dans laquelle cette unité $SDB_{i,j}$ se trouve.

La deuxième tâche TK2 (figures 2 et 3) activée consiste pour le serveur S :

a) à se mettre en attente de paquets envoyés par les unités de traitement, et

b) à chaque réception d'un paquet $Pkt_{i,j}$ ; à lire la valeur $b_{i,j}$ transmise ; à lire l'instant de réception $t_{i,j}$ de ce paquet dans son horloge interne $DT_S$ ; à déterminer l'identifiant i de la colonne de l'unité de traitement qui a envoyé ce paquet en fonction de ($s_0$, $t_{i,j}$, $b_{i,j}$, $\Delta$) ; et à renvoyer un paquet $ARPKT_{i,j}$ en réponse, contenant cet identifiant i.

De manière plus détaillée, comme illustré sur la figure 3, la deuxième tâche TK2 comprend :

∘ une attente de réception de paquets ;
∘ à chaque paquet $Pkt_{i,j}$ reçu d'une unité de traitement $SDB_{i,j}$ émetteur, un enregistrement de la valeur $b_{i,j}$ transmise, et de la date horaire locale $t_{i,j}$ de la réception de ce paquet par le serveur ;
∘ pour chaque couple ($b_{i,j}$, $t_{i,j}$), une détermination de la valeur de i correspondante en fonction des valeurs $b_{i,j}$ et $t_{i,j}$, de l'instant $t_1$ de mise-sous tension de la première colonne, de la valeur $\Delta$ de la temporisation, et de la durée moyenne $s_0$ du processus de démarrage entre l'activation du processus et l'initialisation de l'horloge interne;
∘ un envoi de la valeur i déterminée à l'unité de traitement $SDB_{i,j}$ émetteur en accusé de réception $ARPkt_{i,j}$ du paquet émis $Pkt_{i,j}$.

Selon l'invention, le serveur détermine i à partir de l'égalité suivante (i étant arrondi à l'entier le plus proche) :

$$i = (t_{i,j} - t_1 - b_{i,j} - s_0) / (\Delta + 1).$$

L'identification de la colonne se ramène ainsi à un simple calcul, en attribuant comme identifiant de colonne le rang i de cette colonne dans le séquencement de la mise sous-tension.

Cette égalité résulte en réalité d'une approximation du calcul de la durée $t_{i,j}$, qui néglige les termes suivants qui sont notés sur le chronogramme de la figure 2 :

- la durée $p_{ij}$ qui correspond au temps de propagation du message $Pkt_{i,j}$ entre l'envoi par l'unité de traitement et sa réception par le serveur au temps $t_{ij}$.
- la durée $s_{i,j} = s_{0+} \eta_{i,j}$ : $s_0$ est la valeur moyenne de la durée de la première phase du processus de démarrage BP. Elle est connue pour une ligne de produit donnée. $s_{i,j}$ correspond à la durée vraie, $\eta_{i,j}$ étant la variation (positive ou négative) par rapport à la valeur moyenne.
- la durée vraie égale à $b_{i,j}.(1+\varepsilon_{i,j})$ de la deuxième phase du processus de démarrage BP, où $\varepsilon_{i,j}$ représente la dérive de l'horloge interne de l'unité de traitement par rapport à l'horloge interne $DT_S$ du serveur qui sert de référence de temps.

Considérons en effet l'unité de traitement $SDB_{1,2}$ : comme illustré sur la figure 2, la valeur $t_{1,2}$ de l'instant de réception du paquet $Pkt_{1,2}$ envoyé par $SDB_{1,2}$ au terme du processus de démarrage BP peut s'écrire :

$$t_{1,2=} [t_1 + \Delta] + s_{1,2} + b_{1,2}(1 + \varepsilon_{1,2}) + p_{1,2},$$

où $t_1$ est rappelons-le la date horaire locale, fournie par l'horloge interne du serveur S, de début de la tâche TK1 de mise sous-tension séquentielle des colonnes, c'est à dire de mise sous tension de la première colonne $col_1$ (i=1).

Plus généralement, la valeur $t_{i,j}$ de l'instant de réception du paquet $Pkt_{i,j}$ envoyé par $SDB_{i,j}$ au terme du processus de démarrage BP activé à l'instant $t_1 + (i-1)\Delta$ s'écrit :

$$t_{i,j} = [t_1 + (i - 1)\Delta] + s_{i,j} + b_{i,j}(1 + \varepsilon_{i,j}) + p_{i,j}.$$

On a alors : $i = (t_{i,j} - t_1 - s_0 - \eta_{i,j} - b_{i,j}(1 + \varepsilon_{i,j}) - p_{i,j}) / (\Delta + 1)$, ce qui peut encore s'écrire :

$$i = [(t_{i,j} - t_1 - b_{i,j} - s_0) / (\Delta + 1)] - [(\eta_{i,j} + p_{i,j} + b_{i,j}\, \varepsilon_{i,j}) / \Delta] \quad (EQ1.)$$

premier terme          deuxième terme

$t_{i,j}$, $t_1$, $b_{i,j}$, $\Delta$ et $s_0$, sont des valeurs connues du serveur S : il a pu mémoriser $t_{i,j}$, $t_1$ qui lui ont été fournies par son horloge interne $DT_S$ ; $b_{i,j}$ lui a été transmise par l'unité de traitement ; $\Delta$ et $s_0$ sont des paramètres du processus d'identification, définis par défaut en fonction des unités de traitement SDB utilisées dans le système IFE (caractéristique produit).

Pour calculer i de manière fiable sur la base du premier terme il faut que le deuxième terme soit négligeable devant 1, soit :

$$(\eta_{i,j} + p_{i,j} + b_{i,j}\, \varepsilon_{i,j}) << \Delta.$$

Dans l'invention, on a pu montrer que c'était le cas, à condition de prendre $\Delta$ suffisamment grand devant $\eta_{i,j}$ qui est l'erreur prépondérante dans le système.

En pratique on a pu vérifier que la dérive $\varepsilon_{i,j}$ entre les horloges $DT_{i,j}$ et $DT_S$ est au maximum de 50 ppm (partie par million). Dans un exemple pratique, pour une ligne de produit donnée, on a pu mesurer que la durée $b_{i,j}$ était au maximum de 240 s ce qui donnerait une erreur maximum ($b_{i,j}\, \varepsilon_{i,j}$) due à la dérive égale à 12 millisecondes.

En ce qui concerne la propagation, au moment de l'activation du processus d'identification PISDB, le réseau n'est pas chargé. Dans ces conditions, on a pu vérifier dans un exemple pratique, que la valeur maximale du temps de propagation $p_{i,j}$ était de 10 millisecondes (pire cas).

Enfin en prenant pour $\Delta$ une valeur de l'ordre de 10 fois la valeur de $\eta_{i,j}$, on montre que l'on peut négliger $\eta_{i,j}$ et obtenir i avec une grande fiabilité à partir du seul premier terme de l'équation EQ1, sans que cela soit critique pour la durée du processus d'identification PISDB, et donc de la séquence d'attribution des adresses réseau.

La valeur de $\eta_{i,j}$ est typiquement fonction du produit (unité de traitement SDB). Pour une ligne de produits donnée, on sait calculer la valeur moyenne $s_0$, ainsi que la variation maximale autour de cette valeur moyenne ($\eta_{i,j} \leq \eta$). Dans un exemple pratique, on a obtenu s0 = 46 secondes, et $\eta$ égal 1 seconde (pire cas). En prenant $\Delta$=10 secondes, on a pu identifier i de manière fiable à partir du seul premier terme de l'équation EQ1.

Si $\eta$ était bien plus faible, par exemple de l'ordre de 0.1s, on pourrait prendre par exemple $\Delta$ = 1 seconde.

Cependant, le gain qui en découlerait sur la durée $d_\Delta$ du processus ne serait pas très important. En effet, on a $d_\Delta = \Delta$ x nombre n de colonnes + temps maximum du processus de démarrage BP.

Dans un exemple numérique, en majorant la durée du processus de démarrage BP des unités de traitement par 240 secondes (4 minutes) et avec une architecture de n=16 colonnes, on aurait pour $\Delta$=10 s, $d_\Delta$<400s soit 6 min 40 s; et pour $\Delta$=1s , $d_\Delta$< 260 s soit 4 min 20 s.

Dans l'invention, on montre ainsi que l'on peut prendre pour la temporisation $\Delta$, une valeur d'une dizaine de secondes à quelques dizaines de secondes, sans que cela soit critique pour la durée totale du processus d'identification selon l'invention, valeur qui permet d'obtenir une grande fiabilité de la détermination de i à partir du premier terme de l'équation EQ1.

Le processus d'identification de colonne selon l'invention met ainsi à contribution les unités de traitement $SDB_{i,j}$ et le serveur S, en utilisant leurs horloges internes.

D'une manière générale, le processus selon l'invention comprend donc :

a).une mise sous-tension séquentielle des unités de traitement $SDB_{i,j}$, par colonne, avec une temporisation de durée connue $\Delta$ entre la mise sous tension dans une colonne i et la mise sous-tension dans une colonne suivante i+1, ladite mise sous-tension de la ième colonne $col_i$ déclenchant à l'instant de mise sous tension $t_i$ (= $t_1$+(i-1)$\Delta$) dans chaque unité de traitement $SDB_{i,j}$ de la colonne un processus de démarrage BP comprenant une mise à zéro init_$DT_{i,j}$ d'une horloge interne $DT_{i,j}$,

b). après ladite mise à zéro de son horloge interne, un envoi au serveur réseau S d'au moins un paquet d'acquittement $Pkt_{i,j}$ par une unité de traitement $SDB_{i,j}$, le paquet d'acquittement $Pkt_{i,j}$ comprenant la valeur courante $b_{i,j}$ de l'horloge interne $DT_{i,j}$ au moment de l'envoi du paquet;

c).une identification par le serveur réseau de la colonne d'une unité de traitement $SDB_{i,j}$ sur réception d'un paquet d'acquittement $Pkt_{i,j}$ de cet équipement, sur la base de la valeur courante $b_{i,j}$ contenue dans ce paquet et de la date de réception de ce paquet par le serveur fournie par sa propre horloge interne $DT_S$.

L'unité de traitement $SDB_{i,j}$ utilise un mode d'envoi des paquets du type à confirmation de réception de paquet, et envoie à intervalles déterminés un nouveau paquet contenant la valeur courante correspondante dudit dispositif de datation, jusqu'à recevoir une confirmation de réception correspondante.

Le serveur envoie une identification i de la colonne à l'équipement émetteur d'un paquet d'acquittement $Pkt_{i,j}$, dans un accusé de réception $ARPkt_{i,j}$ de ce paquet.

En pratique, l'envoi du paquet peut correspondre à l'achèvement du processus de démarrage BP. Il s'agit de manière générale d'un instant ou d'une action de référence dans le processus de démarrage, après l'initialisation de l'horloge interne, et après l'initialisation de la liaison sans fil (pour que les paquets $Pkt_{i,j}$ puissent être reçus par le serveur).

Le moment d'envoi du paquet $Pkt_{i,j}$ est ainsi avantageusement la fin de cette séquence de démarrage BP, qui correspond généralement à l'activation de l'initialisation de la liaison sans fil, et la durée $b_{i,j}$ correspond ainsi à la durée de la phase 2 du processus de démarrage BP. Dans un exemple pratique, on a pu évaluer $b_{i,j}$ comme variant d'une unité à l'autre entre 180 et 200 secondes (mais des valeurs plus longues peuvent arriver).

Choisir la fin du processus BP pour l'envoi du paquet permet une mise en oeuvre pratique de l'invention simple, avec un moment identifié le même pour toutes les unités indépendamment de leurs configurations logicielles.

Mais ce moment d'envoi pourrait être un moment quelconque de la deuxième phase du processus de démarrage, pourvu que ce moment soit choisi après l'initialisation de la liaison vers le serveur (pour que les paquets $Pkt_{i,j}$ puissent être transmis).

En pratique, pour permettre la liaison réseau avec le serveur alors que la séquence d'attribution d'adresse réseau SEQ-AD-IP est en cours, on prévoit que l'unité de traitement utilise pour l'échange des messages $Pkt_{i,j}$ et $ARPkt_{i,j}$ une adresse réseau temporaire unique. Une telle adresse temporaire peut être obtenue de toute manière connue, par exemple via un serveur mettant en oeuvre un protocole DHCP (acronyme de "*Dynamic Host Configuration Protocol*"), qui permet d'affecter automatiquement des adresses IP temporaires aux équipements d'un réseau local. La vérification préalable de la disponibilité de la liaison sans fil entre les unités SDB et le serveur S avant l'échange de paquets $Pkt_{i,j}$ et $ARPkt_{i,j}$ sera typiquement basée sur la requête standardisée bien connue sous le terme "ping" : selon cette requête, au message envoyé par l'unité de traitement, le serveur doit envoyer un message de réponse correspondant.

Le réseau local associé au système IFE de l'aéronef mettant généralement en oeuvre un protocole de sécurité, par exemple un protocole de type WPA (*WiFi protected Access*) permettant d'authentifier les utilisateurs sur le réseau et de définir leurs droits d'accès, on devra généralement prévoir des moyens pour que les unités de traitement SDB puissent ouvrir une liaison avec un point d'accès alors que la séquence d'attribution d'adresse réseau est en cours. Par exemple, on peut envisager que pendant la séquence d'attribution des adresses IP, les points d'accès soient configurés pour communiquer en mode non crypté. Par ailleurs, la connaissance du nom du réseau *ESSID,* ou SSID ("*Service Set Identifier*") étant nécessaire pour qu'un équipement sans fil se connecte au réseau, on peut prévoir de distribuer aux unités de traitement SDB les identifiants SSID des points d'accès du système IFE. Une autre alternative est de prévoir d'inscrire en dur dans chaque unité de traitement et dans chaque point d'accès, les identifiants ESSID de chacun des points d'accès du réseau IFE, ainsi que la clé de chiffrement du protocole de sécurité. Ces différentes considérations dépendent typiquement des spécificités matérielles et logicielles du système IFE auquel on cherche à appliquer l'invention et peuvent se résoudre sans difficultés particulières par l'homme de l'art, pour que les liaisons sans fil soient possibles pendant la séquence d'attribution des adresses réseaux.

A noter enfin que, généralement, il est prévu une synchronisation des horloges internes des unités de traitement d'un système IFE. Dans ce cas, cette synchronisation ne sera réalisée qu'après la séquence d'attribution des adresses réseau.

D'autres considérations pratiques seront généralement à prévoir, notamment en cas de défaillance : défaillance de la tentative d'envoi d'un paquet, défaillance de l'identification d'une colonne pour une unité.

Par exemple, il se peut qu'une unité de traitement soit défaillante et n'envoie aucun paquet $Pkt_{i,j}$. Le serveur doit normalement recevoir m.n paquets, un par module. Un module de surveillance peut alors être associé à l'étape d'attente de paquets, qui peut par exemple provoquer la fin de la tâche TK2 et générer un code erreur, en cas de durée d'attente de l'ensemble des m.n paquets trop importante.

Il se peut aussi qu'une unité de traitement n'arrive pas à établir une liaison sans fil avec un point d'accès. Dans ce cas, on prévoit qu'elle effectue un certain nombre de tentatives d'envoi du paquet $Pkt_{i,j}$ .

Il se peut aussi que le serveur n'arrive pas à calculer i, pour une unité de traitement donnée. Dans ce cas, on peut prévoir qu'il retourne une valeur particulière, par exemple 255. Cela pourrait notamment être le cas si le second terme de EQ1 (erreur) était trop grand par rapport à une limite fixée.

Les moyens pratiques de mise en oeuvre nécessitent un dispositif permettant la mise sous-tension en séquence les colonnes, soit typiquement un dispositif 2 à commutateurs de puissance à entrée de commande programmable (figure 1), et l'intégration des tâches particulières du procédé qui ont été décrites, en particulier les différentes mesures/enregistrement des valeurs des horloges internes, les envoi/attente de paquets et leur contenu.

Pour un système IFE donné, il nécessite l'enregistrement des paramètres du processus d'identification à savoir la durée moyenne $s_0$ de la première phase phase 1_BP du processus de démarrage BP des unités de traitement, ainsi que la valeur de temporisation $\Delta$ utilisée. Selon un aspect de l'invention, le vieillissement du matériel pouvant conduire

**EP 1 976 237 B1**

à une modification dans le temps de la valeur de $s_0$, voir de $\eta_{i,j}$, on prévoit que les valeurs de $s_0$ et $\Delta$ varient dans le temps, qu'elles soient modifiées manuellement, ou automatiquement (loi de vieillissement, tables de paramètres en fonction de la durée de fonctionnement du système,...).

## Revendications

1. Procédé d'attribution d'une adresse réseau à chacun des équipements sans fils ($SDB_{i,j}$) d'un réseau dans un aéronef, lesdits équipements étant aptes à échanger des messages avec un serveur réseau (S) par au moins un point d'accès (AP), chaque équipement étant placé à l'emplacement d'un siège dans une colonne de sièges ($Col_j$) et alimenté par une colonne d'alimentation ($PW_i$) propre à la colonne associée, **caractérisé en ce que** ledit procédé comprend un processus (PISDB) d'identification par le serveur de la colonne de sièges ($Col_j$) de chacun desdits équipements sans fils, à partir d'un message envoyé par chaque équipement après sa mise sous-tension, ledit processus d'identification par le serveur comprenant l'exécution en parallèle des étapes suivantes :

   • une première étape de mise sous-tension des équipements sans fil ($SDB_{i,j}$), séquentiellement par colonne ($col_i$), avec une temporisation de durée connue ($\Delta$) entre la mise sous-tension dans une colonne ($col_i$) et la mise sous-tension dans une colonne suivante ($col_{i+1}$), la mise sous-tension de chaque équipement déclenchant un mécanisme d'envoi d'un message au serveur après mise à zéro d'une horloge interne de l'équipement, ledit message contenant une information horaire ($b_{i,j}$) propre à l'équipement, qui est la valeur courante de ladite horloge interne au moment de l'envoi du message, et
   • une deuxième étape de datation horaire, par une horloge interne du serveur (DTs) fournissant une date de réception ($t_{i,j}$) dudit message envoyé par chaque équipement mis sous-tension, et l'identification par le serveur de la colonne de l'équipement ayant envoyé le message, basée sur l'information horaire $b_{i,j}$ contenue dans le message, la datation horaire $t_{i,j}$ du message par le serveur et la durée de temporisation $\Delta$ de mise sous-tension entre les colonnes, ladite identification correspondant au rang i de la colonne dans la séquence de mise sous tension des colonnes et étant déterminée par calcul au moyen de l'équation suivante :
   $i = (t_{i,j} - t_1 - b_{i,j} - s_0) / (\Delta + 1)$, où $s_O$ est la durée moyenne de la durée du processus de démarrage d'un équipement entre l'instant d'activation du processus de démarrage et l'initialisation de l'horloge interne de l'équipement et $t_1$ l'instant de mise sous-tension de la première colonne de la séquence de mise sous tension des colonnes.

2. Procédé d'attribution d'une adresse réseau à chacun des équipements sans fils ($SDB_{i,j}$) d'un réseau dans un aéronef, selon la revendication 1, dans lequel ladite temporisation ($\Delta$) est inférieure à quelques dizaines de secondes, et de préférence comprise entre une dizaine de secondes et quelques dizaines de secondes.

3. Procédé d'attribution d'une adresse réseau à chacun des équipements sans fils ($SDB_{i,j}$) d'un réseau dans un aéronef, selon la revendication 1 ou 2, **caractérisé en ce que**

   - ladite mise sous-tension séquentielle déclenche dans un équipement ($SDB_{i,j}$) :

   a). un processus de démarrage (BP) comprenant la mise à zéro ($init\_DT_{i,j}$) de l'horloge interne ($DT_{i,j}$),
   b). après ladite mise à zéro, un envoi au serveur réseau (S) d'au moins un paquet d'acquittement ($Pkt_{i,j}$) par ledit équipement, ledit paquet d'acquittement ($Pkt_{i,j}$) comprenant la valeur courante ($b_{i,j}$) de l'horloge interne dudit équipement au moment dudit envoi et **en ce que** l'identification par le serveur réseau de la colonne d'un équipement sur réception d'un paquet d'acquittement ($Pkt_{i,j}$) de cet équipement, est effectuée sur la base de ladite valeur courante ($b_{i,j}$) contenue dans ledit paquet et de la date de réception ($t_{i,j}$) dudit paquet d'acquittement fournie par l'horloge interne ($DT_S$) du serveur réseau.

4. Procédé selon la revendication 3, **caractérisé en ce que** chaque équipement sans fil ($SDB_{i,j}$) utilise un mode d'envoi des paquets du type à confirmation de réception de paquet, et envoie à intervalles déterminés un nouveau paquet contenant la valeur courante correspondante dudit dispositif de datation, jusqu'à recevoir une confirmation de réception correspondante.

5. Procédé selon la revendication 3 ou 4, dans lequel le serveur envoie une identification i de colonne à un équipement émetteur d'un paquet d'acquittement ($Pkt_{i,j}$) dans un accusé de réception ($ARPkt_{i,j}$) dudit paquet d'acquittement.

6. Procédé selon l'une quelconque des revendications 3 à 5 précédentes, **caractérisé en ce qu'**au déclenchement d'un processus d'identification (PISDB), le serveur réseau (S) exécute les étapes suivantes :

8

- a) activation d'une boucle de mise sous tension séquentielle des équipements sans fil par colonne de sièges;
- b) pour i=0 jusqu'à n, n entier correspondant au nombre de colonnes :

- • i=i+1
- • mise en alimentation de la colonne i;
- • temporisation, pendant une durée de temporisation $\Delta$ puis retour en b)

- c) pour chaque paquet reçu $(Pkt_{i,j})$, enregistrement de la valeur courante $(b_{i,j})$ transmise dans ledit paquet et de l'heure locale $(t_{i,j})$ de réception de ce paquet par le serveur (S) ;
- d) pour chaque couple (valeur de référence locale $(b_{i,j})$, heure locale $(t_{i,j})$ de réception) détermination d'un numéro i de colonne associé.

7. Procédé selon l'une des revendications 1 à 6, dans lequel les valeurs $s_0$ et $\Delta$ varient en fonction de la durée de fonctionnement du système.

8. Système de divertissement en vol (IFE) comprenant un serveur réseau (S) et des équipements sans fils $(SDB_{i,j})$ aptes à échanger des messages avec le serveur réseau (S) par au moins un point d'accès (AP), chaque équipement étant placé à l'emplacement d'un siège dans une colonne de sièges $(Col_j)$ et alimenté par une colonne d'alimentation $(PW_i)$ propre à la colonne associée, **caractérisé en ce que** le serveur fournit à chaque équipement sans fil une identification de la colonne dans laquelle il est placé, par application d'un procédé d'attribution d'adresses comprenant :

- • une première étape exécutée par le serveur de mise sous-tension des équipements sans fil $(SDB_{i,j})$, séquentiellement par colonne $(col_i)$, avec une temporisation de durée connue $(\Delta)$ entre la mise sous-tension dans une colonne $(col_i)$ et la mise sous-tension dans une colonne suivante $(col_{i+1})$, la mise sous-tension de chaque équipement déclenchant un mécanisme d'envoi d'un message au serveur après mise à zéro d'une horloge interne de l'équipement, ledit message contenant une information horaire $(b_{i,j})$ propre à l'équipement, qui est la valeur courante de ladite horloge interne au moment de l'envoi du message, et
- • une deuxième étape exécutée par le serveur en parallèle de la première étape, de datation horaire, par une horloge interne du serveur (DTs) fournissant une date de réception $(t_{i,j})$ dudit message envoyé par chaque équipement mis sous-tension, et l'identification par le serveur de la colonne de l'équipement ayant envoyé le message, basée sur l'information horaire $b_{i,j}$ contenue dans le message, la datation horaire $t_{i,j}$ du message par le serveur et la durée de temporisation $\Delta$ de mise sous-tension entre les colonnes, ladite identification correspondant au rang i de la colonne dans la séquence de mise sous tension des colonnes et étant déterminée par calcul au moyen de l'équation suivante : $i = (t_{i,j} - t_1 - b_{i,j} - s_0) / (\Delta + 1)$, où $s_O$ est la durée moyenne de la durée du processus de démarrage d'un équipement entre l'instant d'activation du processus de démarrage et l'initialisation de l'horloge interne de l'équipement et $t_1$ l'instant de mise sous-tension de la première colonne de la séquence de mise sous tension des colonnes.

**Patentansprüche**

1. Verfahren zur Netzwerkadresszuteilung an jedes der drahtlosen Geräte $(SDB_{i,j})$ eines Netzwerks in einem Luftfahrzeug, wobei die Geräte in der Lage sind, Meldungen mit einem Netzwerkserver (S) über mindestens einen Zugangspunkt (AP) auszutauschen, wobei jedes Gerät am Ort eines Sitzes in einer Sitzspalte $(Col_j)$ platziert ist und über eine Speisungsspalte $(PW_i)$ gespeist wird, welche der jeweiligen Spalte spezifisch zugehörig ist, **dadurch gekennzeichnet, dass** das Verfahren einen Identifizierungsprozess (PISDB) durch den Server der Sitzspalte $(Col_j)$ eines jeden der drahtlosen Geräte beinhaltet, anhand einer Meldung, welche von jedem Gerät nach seiner Einschaltung gesendet wird, wobei der Identifizierungsprozess durch den Server die parallele Ausführung folgender Schritte beinhaltet:

- • eines ersten Schrittes der Einschaltung der drahtlosen Geräte $(SDB_{i,j})$, sequenziell pro Spalte $(col_i)$, mit einer Verzögerung bekannter Dauer $(\Delta)$ zwischen der Einschaltung in einer Spalte $(col_i)$ und der Einschaltung in einer nächsten Spalte $(col_{i+1})$, wobei die Einschaltung eines jeden Gerätes einen Sendemechanismus einer Meldung an den Server nach Nullstellung einer internen Uhr des Gerätes auslöst, wobei die Meldung eine für das Gerät spezifische Uhrzeitinformation $(b_{i,j})$ enthält, welche der laufende Wert der internen Uhr zum Zeitpunkt der Sendung der Meldung ist, und
- • eines zweiten Schrittes der Uhrzeitdatierung durch eine interne Uhr des Servers (DTs), welche ein Empfangsdatum ($t_{i,j}$) der durch jedes eingeschaltete Gerät gesendeten Meldung bereitstellt, und die Identifizierung durch den Server der Spalte des Gerätes, welches die Meldung gesendet hat, basierend auf der in der Meldung enthaltenen Uhrzeitinformation $b_{i,j}$, der Uhrzeitdatierung $t_{i,j}$ der Meldung durch den Server und der Dauer der Einschalt-Zeitverzögerung $\Delta$ zwischen den Spalten, wobei die Identifizierung dem Rang i der Spalte in der Einschaltsequenz der Spalten entspricht und durch Berechnung anhand folgender Gleichung bestimmt wird: $i = (t_{i,j} - t_1 - b_{i,j} - s_0) / (\Delta + 1)$, wobei $s_0$ die mittlere Dauer der Dauer des Startprozesses eines Gerätes zwischen dem Zeitpunkt der Aktivierung des Startprozesses und der Initialisierung der internen Uhr des Gerätes ist und $t_1$ der Zeitpunkt der Einschaltung der ersten Spalte der Einschaltsequenz der Spalten ist.

2. Verfahren zur Netzwerkadresszuteilung an jedes der drahtlosen Geräte ($SDB_{i,j}$) eines Netzwerks in einem Luftfahrzeug nach Anspruch 1, bei welchem die Zeitverzögerung ($\Delta$) kleiner als einige Zehn Sekunden ist und vorzugsweise zwischen etwa zehn Sekunden und einigen Zehn Sekunden beträgt.

3. Verfahren zur Netzwerkadresszuteilung an jedes der drahtlosen Geräte ($SDB_{i,j}$) eines Netzwerks in einem Luftfahrzeug nach Anspruch 1 oder 2, **dadurch gekennzeichnet, dass**:

- die sequenzielle Einschaltung in einem Gerät ($SDB_{i,j}$) Folgendes auslöst:

a) einen Startprozess (BP), welcher die Nullstellung ($init\_DT_{i,j}$) der internen Uhr ($DT_{i,j}$) beinhaltet,
b) nach der Nullstellung, eine Sendung an den Netzwerkserver (S) von mindestens einem Quittierungspaket ($Pkt_{i,j}$) durch das Gerät, wobei das Quittierungspaket ($Pkt_{i,j}$) den laufenden Wert ($b_{i,j}$) der internen Uhr des Gerätes zum Zeitpunkt der Sendung beinhaltet und dadurch, dass die Identifizierung durch den Netzwerkserver der Spalte eines Gerätes bei Empfang eines Quittierungspaketes ($Pkt_{i,j}$) dieses Gerätes auf der Grundlage des laufenden Wertes ($b_{i,j}$) erfolgt, welcher in dem Paket enthalten ist und des Empfangsdatums ($t_{i,j}$) des Quittierungspaketes, welches von der internen Uhr ($DT_S$) des Netzwerkservers bereitgestellt wird.

4. Verfahren nach Anspruch 3, **dadurch gekennzeichnet, dass** jedes drahtlose Gerät ($SDB_{i,j}$) einen Sendemodus der Pakete vom Typ mit Empfangsbestätigung des Paketes verwendet, und in bestimmten Intervallen ein neues Paket sendet, welches den entsprechenden laufenden Wert der Datierungsvorrichtung enthält, bis es eine entsprechende Empfangsbestätigung empfängt.

5. Verfahren nach Anspruch 3 oder 4, bei welchem der Server eine Identifizierung i der Spalte an ein ein Quittierungspaket ($Pkt_{i,j}$) sendendes Gerät in einer Empfangsbestätigung ($ARPkt_{i,j}$) des Quittierungspaketes sendet.

6. Verfahren nach einem der vorhergehenden Ansprüche 3 bis 5, **dadurch gekennzeichnet, dass** der Netzwerkserver (S) bei Auslösung eines Identifizierungsprozesses (PISDB) folgende Schritte ausführt:

a) Aktivieren einer sequenziellen Einschaltschleife der drahtlosen Geräte pro Sitzspalte;
b) bei i=0 bis n, wobei n eine Ganzzahl ist, welche der Anzahl der Spalten entspricht:

• i=i+1
• Speisungsaktivierung der Spalte i;
• Zeitverzögerung, während einer Verzögerungsdauer $\Delta$, dann wieder zurück zu b)

c) für jedes empfangene Paket ($Pkt_{i,j}$), Registrierung des laufenden Wertes ($b_{i,j}$), welcher in dem Paket übertragen wird und der lokalen Empfangsuhrzeit ($t_{i,j}$) dieses Paketes durch den Server (S);
d) für jedes Wertepaar (lokaler Referenzwert ($b_{i,j}$), lokale Empfangsuhrzeit ($t_{i,j}$)), Bestimmung einer dazugehörigen Spaltennummer i.

7. Verfahren nach einem der Ansprüche 1 bis 6, bei welchem die Werte $s_0$ und $\Delta$ angesichts der Betriebsdauer des Systems variieren.

8. Inflight-Entertainment-System (IFE), welches einen Netzwerkserver (S) und drahtlose Geräte ($SDB_{i,j}$) beinhaltet, welche in der Lage sind, Meldungen mit dem Netzwerkserver (S) über mindestens einen Zugangspunkt (AP) auszutauschen, wobei jedes Gerät am Ort eines Sitzes in einer Sitzspalte ($Col_j$) platziert ist und über eine Speisungsspalte ($PW_i$) gespeist wird, welche der jeweiligen Spalte spezifisch zugehörig ist, **dadurch gekennzeichnet, dass** der Server jedem drahtlosen Gerät eine Identifizierung der Spalte, in welcher es platziert ist, durch Anwendung eines Verfahrens zur Adressenzuteilung bereitstellt, welches Folgendes beinhaltet:

• einen ersten durch den Server ausgeführten Schritt der Einschaltung der drahtlosen Geräte (SDB$_{i,j}$), sequenziell pro Spalte (col$_i$), mit einer Verzögerung bekannter Dauer ($\Delta$) zwischen der Einschaltung in einer Spalte (col$_j$) und der Einschaltung in einer nächsten Spalte (col$_{i+1}$), wobei die Einschaltung eines jeden Gerätes einen Sendemechanismus einer Meldung an den Server nach Nullstellung einer internen Uhr des Gerätes auslöst, wobei die Meldung eine für das Gerät spezifische Uhrzeitinformation (b$_{i,j}$) enthält, welche der laufende Wert der internen Uhr zum Zeitpunkt der Sendung der Meldung ist, und

• einen zweiten, parallel zum ersten Schritt durch den Server ausgeführten Schritt der Uhrzeitdatierung durch eine interne Uhr des Servers (DTs), welche ein Empfangsdatum (t$_{i,j}$) der durch jedes eingeschaltete Gerät gesendeten Meldung bereitstellt, und die Identifizierung durch den Server der Spalte des Gerätes, welches die Meldung gesendet hat, basierend auf der in der Meldung enthaltenen Uhrzeitinformation b$_{i,j}$, der Uhrzeitdatierung t$_{i,j}$ der Meldung durch den Server und der Dauer der Einschalt-Zeitverzögerung $\Delta$ zwischen den Spalten, wobei die Identifizierung dem Rang i der Spalte in der Einschaltsequenz der Spalten entspricht und durch Berechnung anhand folgender Gleichung bestimmt wird: $i = (t_{i,j} - t_1 - b_{i,j} - s_0) / (\Delta + 1)$, wobei s$_0$ die mittlere Dauer der Dauer des Startprozesses eines Gerätes zwischen dem Zeitpunkt der Aktivierung des Startprozesses und der Initialisierung der internen Uhr des Gerätes ist und t$_1$ der Zeitpunkt der Einschaltung der ersten Spalte der Einschaltsequenz der Spalten ist.

## Claims

1. Method of assigning a network address to each of the wireless devices (SDB$_{i,j}$) of a network in an aircraft, said devices being able to exchange messages with a network server (S) via at least one access point (AP), each device being placed in the position of a seat in a column of seats (Col$_j$) and powered by a power supply column (PW$_i$) specific to the associated column, **characterized in that** said method comprises a process (PISDB) of identification, by the server of the column of seats (Col$_j$), of each of said wireless devices based on a message sent by each device after being powered-up, said process of identification by the server comprising the parallel execution of the following steps:

   ▪ a first step of powering-up the wireless devices (SDB$_{i,j}$), sequentially by column (col$_i$), with a time delay of known duration ($\Delta$) between the powering-up in one column (col$_i$) and the powering-up in a next column (col$_{i+1}$), the powering-up of each device triggering a mechanism for sending a message to the server after zero-setting an internal clock of the device, said message containing a time information (b$_{i,j}$) specific to the device, which is the current value of said internal clock at the moment of sending the message, and

   ▪ a second step of timestamping, by an internal server clock (DTs) providing a date of reception (t$_{i,j}$) of said message sent by each powered-up device, and the identification by the server of the column of the device having sent the message, based on the time information b$_{i,j}$ contained in the message, the timestamping t$_{i,j}$ of the message by the server and the delay time $\Delta$ for powering-up between the columns, said identification corresponding to the rank i of the column in the powering-up sequence of the columns and being determined by calculation using the following equation:
   $i = (t_{i,j} - t_1 - b_{i,j} - s_0) / (\Delta + 1)$, where s$_0$ is the average duration of the duration of the boot process of a device between the moment of activation of the boot process and the initialization of the device's internal clock and t$_1$ the time of powering-up of the first column of the powering-up sequence of the columns.

2. Method of assigning a network address to each of the wireless devices (SDB$_{i,j}$) of a network in an aircraft, according to claim 1, in which said time delay ($\Delta$) is less than a few tens of seconds, and preferably between ten or so seconds and a few tens of seconds.

3. Method of assigning a network address to each of the wireless devices (SDB$_{i,j}$) of a network in an aircraft, according to claim 1 or 2, **characterized in that**

   - said sequential powering-up triggers in a device (SDB$_{i,j}$):

   a) a boot process (BP) comprising the zero-setting (init_DT$_{i,j}$) of the internal clock (DT$_{i,j}$),
   b) after said zero-setting, sending to the network server (S) of at least one acknowledgement packet (Pkt$_{i,j}$) by said device, said acknowledgement packet (Pkt$_{i,j}$) comprising the current value (b$_{i,j}$) of the internal clock of said device at the moment of said sending and **in that** the identification by the network server of the column of a device on reception of an acknowledgement packet (Pkt$_{i,j}$) from this device is performed on the basis of said current value (b$_{i,j}$) contained in said packet and the date of reception (t$_{i,j}$) of said acknowledgement packet supplied by the internal clock (DT$_S$) of the network server.

4.  Method according to claim 3, **characterized in that** each wireless device (SDB$_{i,j}$) uses a packet sending mode of the type with packet receipt confirmation, and sends at determined intervals a new packet containing the corresponding current value of said timestamping device, until a corresponding confirmation of receipt is received.

5.  Method according to claim 3 or 4, in which the server sends a column identification i to a device sending an acknowledgement packet (Pkt$_{i,j}$) in an acknowledgement of receipt (ARPkt$_{i,j}$) of said acknowledgement packet.

6.  Method according to any of the preceding claims 3 to 5, **characterized in that**, when an identification process (PISDB) is triggered, the network server (S) performs the following steps:

    a) activation of a loop for sequentially powering up wireless devices per column of seats;
    b) for i=0 up to n, n being an integer number corresponding to the number of columns:

    - i=i+1
    - powering up of the column i;
    - time delay, for a time delay duration $\Delta$ then return to b);

    c) for each received packet (Pkt$_{i,j}$), storage of the current value (b$_{i,j}$) transmitted in said packet and of the local time (t$_{i,j}$) of reception of this packet by the server (S);
    d) for each pair (local reference value (b$_{i,j}$), local reception time (t$_{i,j}$)), determination of an associated column number i.

7.  Method according to any of claims 1 to 6, in which the values s$_0$ and $\Delta$ vary according to the system operating time.

8.  In-flight entertainment system (IFE) comprising a network server (S) and wireless devices (SDB$_{i,j}$) able to exchange messages with the network server (S) via at least one access point (AP), each device being placed in the position of a seat in a column of seats (Col$_j$) and powered by a power supply column (PW$_i$) specific to the associated column, **characterized in that** the server supplies each wireless device with an identification of the column in which it is placed, by applying an address assignment process comprising:

    - a first step, performed by the server, of powering-up the wireless devices (SDB$_{i,j}$), sequentially by column (col$_i$), with a time delay of known duration ($\Delta$) between the powering-up in one column (col$_i$) and the powering-up in a next column (col$_{i+1}$), the powering-up of each device triggering a mechanism for sending a message to the server after zero-setting an internal clock of the device, said message containing a time information (b$_{i,j}$) specific to the device, which is the current value of said internal clock at the moment of sending the message, and
    - a second step, performed by the server in parallel to the first step, of timestamping, by an internal server clock (DTs) providing a date of reception (t$_{i,j}$) of said message sent by each powered-up device, and the identification by the server of the column of the device having sent the message, based on the time information b$_{i,j}$ contained in the message, the timestamping t$_{i,j}$ of the message by the server and the delay time $\Delta$ for powering-up between the columns, said identification corresponding to the rank i of the column in the powering-up sequence of the columns and being determined by calculation using the following equation: $i = (t_{i,j} - t_1 - b_{i,j} - s_0) / (\Delta + 1)$, where s$_0$ is the average duration of the duration of the boot process of a device between the moment of activation of the boot process and the initialization of the device's internal clock and t$_1$ the time of powering-up of the first column of the powering-up sequence of the columns.

FIG.1

FIG.2

FIG.3

EP 1 976 237 B1

SDB$_{i,j}$

PWi    Activation BP

BP

$s_0$ (Phase 1_BP)

init_DT$_{i,j}$    horloge interne
DT$_{i,j}$

(Phase 2_BP)    b$_{i,j}$

Lecture b$_{i,j}$=(DT$_{i,j}$)
Envoi paquet vers
le serveur avec
valeur b$_{i,j}$    Pkt$_{i,j}$

Attente de ARPkt$_{i,j}$    ARPkt$_{i,j}$

Enregistrement i, err$_i$

E/S$_{wifi}$

FIN_BP

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060246892 A